(19) Europäisches Patentamt / European Patent Office / Office européen des brevets

(11) **EP 3 169 897 B1**

(12) **EUROPÄISCHE PATENTSCHRIFT**

(45) Veröffentlichungstag und Bekanntmachung des Hinweises auf die Patenterteilung:
**19.10.2022   Patentblatt 2022/42**

(21) Anmeldenummer: **15738376.1**

(22) Anmeldetag: **17.07.2015**

(51) Internationale Patentklassifikation (IPC):
**F03D 1/06** (2006.01)

(52) Gemeinsame Patentklassifikation (CPC):
**F03D 1/0633;** F05B 2240/221; F05B 2240/30;
F05B 2250/183; F05B 2260/96; Y02E 10/72;
Y02P 70/50

(86) Internationale Anmeldenummer:
**PCT/EP2015/066391**

(87) Internationale Veröffentlichungsnummer:
**WO 2016/009037 (21.01.2016 Gazette 2016/03)**

(54) **WINDENERGIEANLAGEN-ROTORBLATT, ROTORBLATTHINTERKANTE, UND VERFAHREN ZUM HERSTELLEN EINES WINDENERGIEANLAGEN-ROTORBLATTES, UND WINDENERGIEANLAGE**

WIND-TURBINE ROTOR BLADE, ROTOR BLADE TRAILING EDGE, METHOD FOR PRODUCING A WIND-TURBINE ROTOR BLADE, AND WIND TURBINE

PALE DE ROTOR D'ÉOLIENNE, BORD DE FUITE DE PALE DE ROTOR ET PROCÉDÉ DE FABRICATION D'UNE PALE DE ROTOR D'ÉOLIENNE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2014   DE 102014213929**

(43) Veröffentlichungstag der Anmeldung:
**24.05.2017   Patentblatt 2017/21**

(73) Patentinhaber: **Wobben Properties GmbH**
**26607 Aurich (DE)**

(72) Erfinder:
• **KAMRUZZAMAN, Mohammad**
**Southampton SO19 7DG (GB)**
• **ALTMIKUS, Andree**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2014/086919      DE-A1-102008 037 368
US-A1- 2011 142 666      US-A1- 2013 149 162

**Beschreibung**

Die Erfindung betrifft eine Hinterkante für ein Windenergieanlage-Rotorblatt, eine Rotorblatt-Hinterkante und eine Windenergieanlage. Zudem betrifft die vorliegende Erfindung ein Verfahren zum Herstellen eines Rotorblatts.

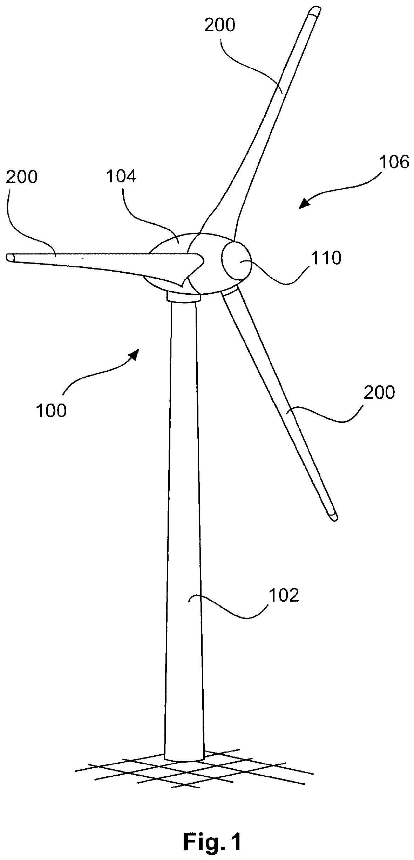

Windenergieanlagen sind allgemein bekannt und beispielsweise wie in Figur 1 ausgestaltet. Für die Effizienz der Windenergieanlage ist das Design des bzw. der Rotorblätter ein wichtiger Aspekt. Die Rotorblätter einer Windenergieanlage weisen üblicherweise eine Saug- und eine Druckseite auf. Die Saug- und die Druckseite laufen an der Hinterkante des Rotorblatts zusammen. Durch den Druckunterschied zwischen Saug- und Druckseite können Wirbel erzeugt werden, die an der Hinterkante des Rotorblattes für eine Geräuschemission und Leistungsminderung sorgen können.

Um die Geräuschemission und die Leistungsminderung zu reduzieren, wurden bereits Hinterkanten mit Zacken vorgeschlagen. Die Effektivität der Geräuschreduktion hängt dabei wesentlich von der Zackengeometrie ab. Das Vorsehen der optimalen Zackengeometrie an der Hinterkante eines Rotorblattes einer Windenergieanlage kann aber aufwendig sein und es besteht die Gefahr, dass ein so großer Aufwand verursacht wird, der in keinem angemessenen Verhältnis zur Wirkung steht.

In der prioritätsbegründenden deutschen Patentanmeldung hat das Deutsche Patent- und Markenamt den folgenden Stand der Technik recherchiert: DE 10 2008 037 368 A1, EP 0 652 367 A1, WO 2014/086919 A1, US 2003/0 175 121 A1 und US 5 088 665 A.

Der vorliegenden Erfindung liegt somit die Aufgabe zugrunde, wenigstens eines der oben genannten Probleme zu adressieren, insbesondere soll eine Lösung vorgeschlagen werden, die die Wirksamkeit eines Rotorblattes einer Windenergieanlage weiter steigert und die Geräuschemission reduziert.

Aufgabe der vorliegenden Erfindung ist es insbesondere, die Effizienz eines Rotorblatts ohne Zunahme bzw. bei gleichzeitiger Reduktion von Geräuscheffekten weiter zu steigern. Zumindest soll eine alternative Lösung geschaffen werden.

Diese Aufgabe wird durch ein Windenergieanlagen-Rotorblatt nach Anspruch 1, ein Verfahren zum Herstellen eines Windenergieanlagen-Rotorblattes nach Anspruch 8 sowie durch eine Windenergieanlage nach Anspruch 7 gelöst.

Damit weist ein Windenergieanlagen-Rotorblatt eine Rotorblattspitze, eine Rotorblattwurzel, eine Saugseite, eine Druckseite, eine Rotorblattlänge, eine Profiltiefe und eine Pitch-Drehachse auf. Die Profiltiefe nimmt entlang der Rotorblattlänge von der Rotorblattwurzel zur Rotorblattspitze hin ab. Die Hinterkante weist eine Hinterkantenverlaufslinie auf, welche die Kontur der Hinterkante abbildet. Die Hinterkante weist eine Mehrzahl von Zacken zur Verbesserung eines Strömungsverhaltens an der Hinterkante auf. Die Zacken weisen jeweils eine Zackenspitze, zwei Zackenkanten und eine Winkelhalbierende auf. Die Zackenkanten sind nicht parallel zu einer Anströmrichtung vorgesehen, welche senkrecht zur Pitch-Drehachse steht. Die Zackenkanten stehen nicht senkrecht auf einer Tangente an der Hinterkantenverlaufslinie. Die Hinterkantenverlaufslinie weist eine Mehrzahl von Abschnitten auf, wobei zumindest eine der Abschnitte nicht parallel zu der Pitch-Drehachse verläuft.

Gemäß einem Aspekt der vorliegenden Erfindung ist eine Länge der zwei Hinterkanten einer Zacke ungleich und/oder die Winkelhalbierende einer Zacke steht nicht senkrecht zur Pitch-Drehachse und/oder ein Winkel einer Winkelhalbierenden zu einer Tangente an der Hinterkantenverlaufslinie weist einen Winkel zwischen 70 und 110 Grad, insbesondere 90 Grad auf.

Das Rotorblatt kann über seine gesamte Blattlänge, also von der Rotorblattwurzel bis hin zur Rotorblattspitze eine Hinterkante mit einer Hinterkantenverlaufslinie aufweisen. Die Hinterkantenverlaufslinie bildet dabei die Kontur der Hinterkante ab, also die Linie, in der sich die Saug- und die Druckseite des Rotorblattes treffen. Insbesondere ist eine solche Hinterkantenverlaufslinie eine gekrümmte Line. An der Hinterkantenverlaufslinie sind die mehreren Zacken nebeneinander angeordnet. Die Zacken sind dabei in Abhängigkeit von der Hinterkantenverlaufslinie vorgesehen bzw. ausgerichtet. D.h., dass bei der Auslegung der Zacken an der Hinterkante die Hinterkantenverlaufslinie berücksichtigt wird und somit die Kontur bzw. die Geometrie der Hinterkante. Demnach werden auch Krümmungen und dergleichen bei der Ausrichtung der Zacken an der Hinterkante berücksichtigt. Dies hat den Vorteil, dass die Zacken optimal an den Hinterkantenverlauf angepasst sind und somit auftretende Wirbel verringert werden können. Dadurch werden ebenfalls die Geräuschemission und ein Leistungsabfall verringert.

Die Profile bzw. die Geometrien und somit auch die Hinterkantenverlaufslinie von Rotorblättern verschiedener Windenergieanlagen-Typen sind unterschiedlich ausgestaltet. Die Ausgestaltung ist dabei abhängig von den verschiedenen Standorten, an denen unterschiedliche Windverhältnisse wie Starkwind oder Schwachwind vorherrschen können. Dabei ist die Definition der Zacken von den Geometrie- und Betriebsparametern des Rotorblatts bzw. der Windenergieanlage und somit von der Hinterkantenverlaufslinie abhängig. Durch die Anordnung der Zacken abhängig von der Hinterkantenverlaufslinie, sind die Zacken individuell an das jeweilige Profil des Rotorblatts anpassbar. Die Geräuschemission kann somit optimal reduziert werden und die Leistung der Windenergieanlage gesteigert werden.

Vorzugsweise sind die Zacken normal zur Hinterkantenverlaufslinie angeordnet. Dabei weisen die einzelnen Zacken jeweils eine Zackenhöhe auf. Die maximale Zackenhöhe befindet sich hierbei auf einer Normalen zur Hinterkantenverlaufslinie. Solche Zacken können an der Hinterkante auftretende Turbulenzen unterschiedlicher Größe auffangen und somit die Geräuschemission verringern. Bei einer gekrümmten Hinterkantenverlaufslinie sind die Zacken entsprechend ungleich ausgerichtet. Sie weisen somit zumindest teilweise in verschiedene Richtungen.

Erfindungsgemäß weist jede Zacke wenigstens zwei Zackenkanten auf und die Hinterkante einen Zacken-Hinterkantenverlaufswinkel, der durch eine Zackenkante und der normal zur Hinterkantenverlaufslinie vorgesehene Anströmungsrichtung definiert ist. Dabei ist der Zacken-Hinterkantenverlaufswinkel kleiner als 90°, insbesondere kleiner als 45°. Die genannten Werte erzielen ein optimales Strömungsverhalten an der Hinterkante. Dass der Zacken-Hinterkantenverlaufswinkel normal zur Hinterkantenverlaufslinie verläuft ist eine theoretische Annahme. In der Realität kann ein solcher Zacken-Hinterkantenverlaufswinkel durchaus auch durch eine Veränderung der Anströmung größer sein, was nicht zu einem optimalen Strömungsverhalten an der Hinterkante führt. Durch die Ausrichtung der Zacken mit einem Zacken-Hinterkantenverlaufswinkel kleiner als 90, insbesondere kleiner als 45°, können solche Änderungen in der Anströmrichtung aber ausgeglichen werden, so dass dies kaum Einfluss auf die Geräuschentwicklung und/oder Leistung der Windenergieanlage nimmt. In einer bevorzugten Ausführungsform ist der Zacken-Hinterkantenverlaufswinkel entlang einer Rotorblattlänge variabel, wobei die Rotorblattlänge durch die Länge des Rotorblattes von der Rotorblattwurzel bis zur Rotorblattspitze definiert ist. D.h., der Winkel zwischen einer Zackenkante und der Anströmrichtung, die normal zur Hinterkantenverlaufslinie vorgesehen ist, ist nicht nur auf einen Wert beschränkt. Vielmehr können sich beispielsweise im Bereich der Rotorblattwurzel andere Werte für den Zacken-Hinterkantenverlaufswinkel ergeben als im Bereich der Rotorblattspitze. Somit kann ein optimales Strömungsverhalten erzielt werden.

In einer bevorzugten Ausführungsform weist das Rotorblatt eine Pitch-Achse auf und die Zacken sind normal zu der Pitch-Achse angeordnet. Unter der Pitch-Achse des Rotorblattes ist dabei die Achse zu verstehen, um die der Anstellwinkel, also der Pitch, der Rotorblätter verstellt wird. Der Anstellwinkel oder Pitch-Winkel wird verstellt, um die Leistung der Windenergieanlage zu regeln und bei wechselnden Windgeschwindigkeiten jeweils einen optimalen Wirkungsgrad der Windenergieanlage zu erreichen. Es gibt dabei Theorien, dass sich die Anströmung normal zu dieser Pitch-Achse bzw. Anstellachse verhält. Eine Ausrichtung der Zacken entsprechend der Pitch-Achse bewirkt eine Reduktion der Wirbel und somit eine Geräuschminderung.

Vorzugsweise weist die Hinterkante einen Zacken-Pitchwinkel auf, der an einer vorgegebenen Position auf der Hinterkantenverlaufslinie durch eine Tangente definiert ist. Die Hinterkantenverlaufslinie weist für jede Position entlang der Spannweite des Rotorblatts verschiedene Punkte auf. Das Hineinlegen einer Tangente in den jeweiligen Punkt ergibt viele verschiedene Tangenten und somit verschiedene Zacken-Pitchwinkel entlang der Spannweite des Rotorblatts. Der Winkel zwischen der Pitch-Achse und der jeweiligen Tangente definiert den Zacken-Pitchwinkel. Dieser ist somit ebenfalls in Abhängigkeit der Hinterkantenverlaufslinie berechnet. Durch die Anpassung an die Hinterkantenverlaufslinie können auftretende Wirbel reduziert werden, wodurch auch die Geräuschemission verringert wird.

Vorzugsweise sind die mehreren Zacken und/oder Zackenkanten entlang einer bzw. der Rotorblattlänge an der Hinterkante unsymmetrisch angeordnet. Dadurch, dass die Hinterkantenverlaufslinie eine gekrümmte Form aufweisen kann und die Zacken abhängig von der Hinterkantenverlaufslinie ausgerichtet sind, sind die Zacken an verschiedenen Positionen entlang der Rotorblattlänge verschieden ausgerichtet und somit nicht symmetrisch. Insbesondere die zwei Zackenkanten einer Zacke können dabei im Verhältnis zu der Anströmung verschiedene Winkel aufweisen. Dadurch können verschiedene Wirbel ausgeglichen werden.

In einer besonders bevorzugten Ausführungsform verläuft die Hinterkantenvedaufslinie zumindest teilweise über die Spannweite des Rotorblatts gekrümmt, also nicht gerade. Da aerodynamische Profile eine sehr komplexe Geometrie zur Erzielung der optimalen Leistung aufweisen, ist es teilweise notwendig, dass die Hinterkantenverlaufslinie an einigen Stellen entlang der Rotorblattlänge nicht gerade, also gekrümmt verlaufen. Dadurch, dass die Zacken an die Hinterkantenverlaufslinie angepasst sind bzw. abhängig davon berechnet sind, wird eine solche Krümmung mit berücksichtigt, Das Rotorblatt kann somit hinsichtlich seines Profils und der optimalen Anordnung der Zacken an der Hinterkante bzw. der Zackengeometrie ausgelegt werden.

Erfindungsgemäß weist das Rotorblatt eine Rotorblattwurzel und eine Rotorblattspitze auf, wobei der Zacken-Hinterkantenverlaufswinkel bei den Zackenkanten, die zur Rotorblattwurzel zeigen, von der Rotorblattwurzel zur Rotorblattspitze zunimmt und/oder bei den Zacken, die von der Rotorblattwurzel wegzeigen, von der Rotorblattwurzel zur Rotorblattspitze abnimmt. D.h., der Zacken-Hinterkantenverlaufswinkel verringert sich einerseits auf der Seite der Zacken, die in Richtung der Rotorblattspitze zeigen und erhöht sich andererseits auf der Seite der Zacken, die der Rotorblattwuzel zugewandt sind. Aufgrund der verschiedenen Anströmbedingungen, wie Reynoldzahl, Machzahl, Anstellwinkel usw., die an der Rotorblattwurzel und der Rotorblattspitze auftreten, werden nahe der Hinterkante Wirbel in verschiedenen Größen erzeugt. Für große Wirbel sind beispielsweise große Zacken-Hinterkantenverlaufswinkel effektiv und für kleine Wirbel kleine Zacken-Hinterkantenverlaufswinkel. Durch die erfindungsgemäße Anordnung können somit die kleinen und die großen Wirbel abgedeckt werden. Zudem weist eine solche Anordnung bei mittel großen Wirbeln zumindest eine durchschnittlich gute Effektivität auf.

Zudem wird zur Lösung der Aufgabe ein Rotorblatt für eine Windenergieanlage vorgeschlagen, umfassend wenigstens eine Hinterkante gemäß einer der vorstehenden Ausführungsformen.Ein solches Rotorblatt ist dabei insbesondere ein Rotorblatt eines Luvläufers mit aktiver Blattverstellung. Das Rotorblatt ist dabei bei Windenergieanlagen aller Leistungsklassen, insbesondere in Leistungsklassen in einem Megawatt-Bereich anwendbar. Es ergeben sich somit die Zusammenhänge, Erläuterungen und Vorteile gemäß wenigstens einer Ausführungsform der beschriebenen Hinterkante.

Weiterhin wird eine Windenergieanlage mit wenigstens einem erfindungsgemäßen Rotorblatt, vorzugsweise mit drei erfindungsgemäßen Rotorblättern vorgeschlagen.

Ferner wird ein Verfahren zum Berechnen einer Zackengeometrie an einer Hinterkante eines Rotorblatts eines aerodynamischen Rotors einer Windenergieanlage vorgeschlagen. Dabei weist die Hinterkante eine Hinterkantenverlaufslinie auf, die die Kontur der Hinterkante abbildet, und die Zackengeometrie wird in Abhängigkeit von der Hinterkantenverlaufslinie berechnet. Jede Zacke weist dabei eine Zackenhöhe, Zackenbreite und wenigstens zwei Zackenkanten auf. Die Zackenkanten verlaufen dabei von der Zackenbreite zur Zackenspitze. Sie können sich in der Zackenspitze berühren oder alternativ kann die Zackenspitze auch rund oder mit einer weiteren Kante ausgeführt sein. Die Zackengeometrie wird durch das vorliegende Verfahren insbesondere über die Anordnung der Zackenkanten zu der Hinterkantenverlaufslinie definiert.

Es ergeben sich somit die Zusammenhänge, Erläuterungen und Vorteile gemäß wenigstens einer Ausführungsform der beschriebenen Hinterkante.

Vorzugsweise wird bei dem erfindungsgemäßen Verfahren

- die lokale Anströmung als Normale zu dem Hinterkantenverlauf angenommen und/oder

- ein Zacken-Hinterkantenverlaufswinkel, der durch die Anströmung und eine Zackenkante definiert ist, berechnet,

wobei der Zacken-Hinterkantenverlaufswinkel kleiner als 90° ist, vorzugsweise kleiner als 60°, insbesondere kleiner als 45°.

In einer bevorzugten Ausführungsform wird bei einem erfindungsgemäßen Verfahren

- die Anströmungsrichtung als normal zur Pitch-Achse des Rotorblatts angenommen und/oder

- mehrere Zacken werden normal zur Pitch-Achse ausgerichtet,

wobei ein Zacken-Pitchwinkel berechnet wird, der zwischen der Pitch-Achse und einer Zackenkante dem Winkel einer Tangente an einer Position der Hinterkante entspricht.

Die Hinterkantenverlaufslinie weist für jede Position entlang der Spannweite des Rotorblatts verschiedene Punkte auf. Das Hineinlegen einer Tangente in den jeweiligen Punkt ergibt viele verschiedene Tangenten und somit verschiedene Zacken-Pitchwinkel entlang der Rotorblattlänge. Der Winkel zwischen der Pitch-Achse und der jeweiligen Tangente definiert den Zacken-Pitchwinkel. Dieser ist somit ebenfalls in Abhängigkeit der Hinterkantenverlaufslinie berechnet. Durch die Anpassung an die Hinterkantenverlaufslinie können auftretende Wirbel reduziert werden, wodurch auch die Geräuschemission verringert wird.

In einer bevorzugten Ausführungsform wird das Verfahren zum Berechnen einer Zackengeometrie für eine Hinterkante nach wenigstens einer der vorher beschriebenen Ausführungsformen verwendet.

Den Berechnungen liegen dabei folgende Überlegungen zugrunde.

Die Strouhal-Zahl ist sehr viel kleiner als 1. Die Strouhal-Zahl ist dabei eine dimensionslose Kenngröße der Aerodynamik, mit der bei instationärer Strömung die Ablösefrequenz von Wirbeln beschrieben werden kann. Die Strouhal-Zahl wird unter anderem von der Zackenhöhe beeinflusst. Für die Zackenhöhe ergibt sich dabei der folgende Zusammenhang:

$$H\left(\frac{r}{R}\right) = 2h = c2 \cdot \Lambda_{p3}\left(\frac{r}{R}\right)$$

C2 weist dabei einen Wert von 2 bis 15 auf und eine Konstante. Die Zackenhöhe berechnet sich somit aus der Kohärenzlängenskala $\Lambda_{p3}$ der turbulenten Druckfluktuation unter der Verwendung eines konstanten Faktors c2. Der Faktor c2 kann empirisch ermittelt werden, bspw. aus Testmessungen oder aus Erfahrungswerten.

Das Verhältnis der Zackenhöhe zu der Zackenbreite wird als $\frac{H}{\lambda} > 0,5$ , wobei $\lambda = H / c3$ ist und c3 = 0,5 bis 6 eine empirische Konstante ist.

Der Winkel zwischen der lokalen Anströmrichtung und der Zackenkante, also der Zacken-Hinterkantenverlaufswinkel ist $\Phi_i < 90°$. dabei wird vorausgesetzt, dass die Anströmung normal zu der Pitch-Achse des Rotorblatts ist, vorliegend also $\Phi_i = \Phi \pm \theta_i$. Wobei $\theta_i$ der Zacken-Pitchwinkel ist. Dabei variiert der Zacken-Pitchwinkel $\theta_i$ entlang der Rotorblattlänge abhängig von dem Hinterkantenverlauf.

Nachfolgend wird die Erfindung exemplarisch anhand von Ausführungsbeispielen unter Bezugnahme auf die begleitenden Figuren näher erläutert.

Figur 1    zeigt eine Windenergieanlage schematisch in einer perspektivischen Ansicht.

Figur 2  zeigt schematisch ein Rotorblatt mit einer Hinterkante mit einem gezackten Verlauf mit mehreren Zacken gemäß einem ersten Ausführungsbeispiel.

Figur 3  zeigt schematisch einen Ausschnitt eines Rotorblatts mit einer Zackengeometrie der Hinterkante entlang der Spannweite.

Figur 4  zeigt einen vergrößerten Ausschnitt des Rotorblatts der Figur 3.

Figur 5  zeigt einen weiteren vergrößerten Ausschnitt des Rotorblatts der Figur 3.

Figur 6  zeigt schematisch einen Ausschnitt eines Rotorblatts mit zwei verschiedenen Zackengeometrien an der Hinterkante.

Figur 7  zeigt einen vergrößerten Ausschnitt des Rotorblatts der Figur 6.

Figur 8  zeigt schematisch einen Ausschnitt eines Rotorblatts gemäß dem ersten Ausführungsbeispiel.

Figur 9  zeigt eine schematische Darstellung eines Ausschnitts eines Rotorblatts gemäß einem zweiten Ausführungsbeispiel der Erfindung.

Es ist zu beachten, dass gleiche Bezugszeichen eventuell ähnliche, nicht identische Elemente auch unterschiedlicher Ausführungsformen bezeichnen können.

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, so dass die vorgesehene zackenförmige Hinterkante an dem Rotorblatt nicht eindeutig erkennbar ist.

Figur 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an. Der Pitch der drei Rotorblätter ist z.B. jeweils durch einen Pitchantrieb einstellbar.

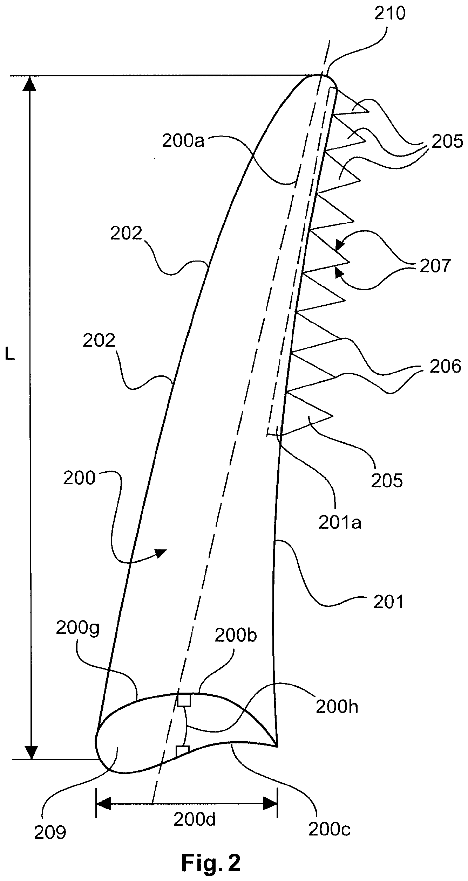

Figur 2 zeigt schematisch ein Windenergieanlagen-Rotorblatt 200 gemäß einem ersten Ausführungsbeispiel mit einer Rotorblatthinterkante 201, die vereinfachend auch als Hinterkante bezeichnet wird. Das Rotorblatt 200 weist eine Rotorblattwurzel 209 und eine Rotorblattspitze 210 auf. Die Länge zwischen der Rotorblattspitze 210 und der Rotorblattwurzel 209 wird als Rotorblattlänge L bezeichnet. Das Rotorblatt 200 weist eine Pitch-Drehachse 200a auf. Die Pitch-Drehachse 200a ist die Drehachse des Rotorblattes, wenn der Pitch des Rotorblattes verstellt wird. Das Rotorblatt 200 weist eine Saugseite 200b, eine Druckseite 200c, und eine Vorderkante 202 auf. Das Rotorblatt 200 weist eine Profiltiefe 200d auf, welche entlang der Länge L des Rotorblattes (zur Rotorblattspitze hin) abnimmt.

Das Rotorblatt 200 weist eine Außenschale 200g unter anderem mit einem Faserverbundwerkstoff, wie z.B. GFK (Glasfaser verstärkter Kunststoff) oder CFK (Kohlenfaser verstärkter Kunststoff) auf. Zusätzlich können Stege 200h zwischen der Saugseite und der Druckseite vorgesehen sein.

Die Hinterkante 201 ist (entlang der Länge L des Rotorblattes) nicht gerade, sondern weist eine Mehrzahl von Abschnitten auf, welche unterschiedlich zur Pitch-Drehachse 200a ausgerichtet sein können.

An dem Rotorblatt 200 ist eine Hinterkante 201 vorgesehen, die einen gezackten Verlauf mit mehreren Zacken 205 aufweist, die beispielhaft an einem Abschnitt des Rotorblatts 200 entlang des Rotorblatts 200 nebeneinander angeordnet sind. Jede Zacke 205 weist jeweils eine Zackenspitze 206 sowie zwei Zackenkanten 207 auf, die sich in der Zackenspitze 206 berühren. Jeweils eine Seite einer Zackenkante 207 berührt ebenfalls eine benachbarte Zackenkante 207 und berührt auf der entgegengesetzten Seite, also im Bereich der Zackenspitze 206 wieder die zweite zu der jeweiligen Zacke 205 gehörigen Zackenkante 207 usw. Es sei angemerkt, dass der dargestellte Ausschnitt des Rotorblatts 200 nur ein Ausführungsbeispiel ist. Die Zacken 205 können beispielsweise auch in einem oder mehreren weiteren Abschnitten oder über die gesamte Blattlänge L des Rotorblatts 200 vorgesehen sein. Ferner ist es möglich, dass die Zacken 205 auch weiter über die Hinterkante 201 des Rotorblatts 200 verlaufen.

Gemäß der Erfindung kann eine Hinterkante mit der Mehrzahl der Zacken 205 als ein separates Teil 201a ausgestaltet sein. Damit kann ein Hinterkantenabschnitt 201a mit der Mehrzahl der Zacken 205 auch bei einem bestehenden Rotorblatt nachgerüstet werden. Ferner kann dieser Hinterkantenabschnitt 201a separat hergestellt werden, um während der Produktion des Rotorblattes an der Hinterkante befestigt werden. Dazu kann es nötig sein, dass ein Abschnitt oder Ausschnitt aus der Hinterkante des bereits hergestellten Rotorblattes entfernt bzw. herausgesägt oder herausgetrennt werden muss.

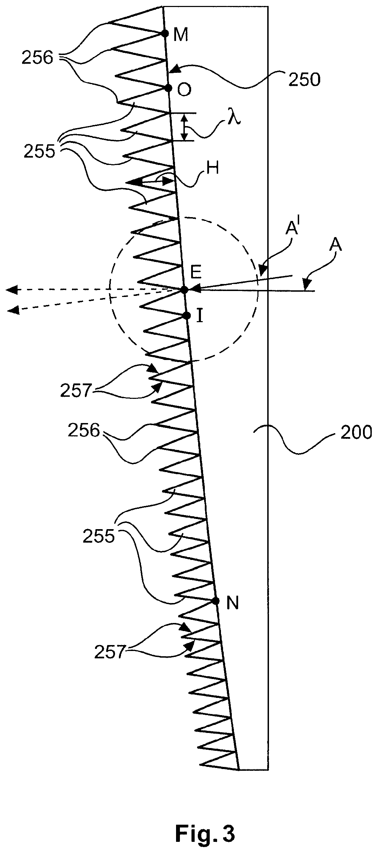

Figur 3 zeigt einen Ausschnitt 252 eines Rotorblatts 200 wie es beispielsweise in Figur 2 abgebildet ist mit einer Hinterkantenverlaufslinie, die vorliegend vereinfachend auch als Hinterkantenverlauf 250 bezeichnet wird. Eine Kurve entlang der Punkte MOEN kennzeichnet den Hinterkantenverlauf 250 des Rotorblattes 200 als eine Funktion verschiedener radialer Positionen, also verschiedener Positionen entlang der Rotorblattlänge bzw. der Spannweite des Rotorblatts 200.

In Figur 3 ist zudem die Richtung der lokalen Anströmungsrichtung A' und A zu erkennen. Die lokale Anströmungsrichtung A' und A unterscheidet sich durch zwei verschiedene Annahmen. Bei der lokalen Anströmungsrichtung A' wird angenommen, dass sie normal zu der Hinterkante verläuft. Die lokale Anströmungsrichtung A ist normal zu der Pitch-Achse 200a des Rotorblatts 200 vorgesehen. Entlang des Hinterkantenverlaufs 250 sind mehrere Zacken 255 angeordnet, die jeweils eine Zackenspitze 256 sowie jeweils zwei Zackenkanten 257 aufweisen. Zudem weisen die Zacken 255 eine Zackenhöhe H sowie eine Zackenbreite λ auf.

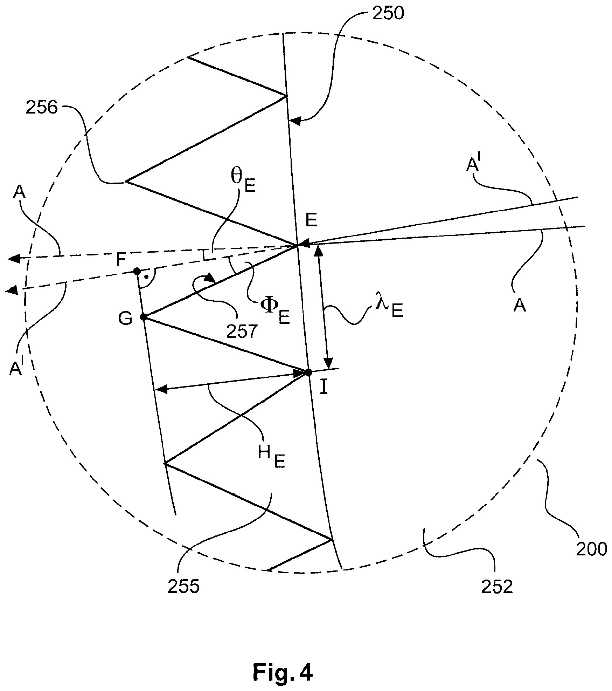

Figur 4 zeigt einen vergrößerten Ausschnitt 252 des Rotorblatts 200 der Figur 3 an den Punkten E und I auf der Hinterkantenverlaufslinie 250. Zudem ist die Zackenhöhe $H_E$ sowie die Zackenbreite $\lambda_E$ an dem Punkt E eingezeichnet. Der Punkt G ist in der Zackenspitze 256 eingezeichnet. Der Punkt F ist der Schnittpunkt der lokalen Anströmrichtung A' und der Verlängerungslinie des Punktes G, die in einem rechten Winkel zueinander angeordnet sind.

Die Zackenkante 257 bildet an dem Punkt E gemeinsam mit der lokalen Anströmungsrichtung A' ei-nen Zacken-Hinterkantenverlaufswinkel $\Phi_E$. Für eine ge-gebene Definition der Zackenhöhe $H_E$ und Zackenbreite $\lambda_E$ an dem Punkt E kann der Winkel $\Phi_E$ errechnet werden. Aus dem Dreieck EFG in Figur 4 ergibt sich damit:

$$\tan(\Phi_E) = \frac{\lambda_E / 2}{H_E} = \frac{\lambda_E}{2H_E}$$

und mit $\dfrac{H_E}{\lambda_E} = 2$ folgt

$$\tan(\Phi_E) = \frac{\lambda_E}{2H_E} = \frac{1}{4}$$

. Daraus folgt $\Phi_E = 14{,}03°$.

Wenn somit entlang der gesamten Spannweite des Rotorblatts $H_E/\lambda_E = 2$ konstant bleibt, bleibt $\Phi_E = 14{,}03$ ebenfalls konstant. Es hat sich gezeigt, dass die maximale Lärmreduktion erzielt werden kann, wenn der Winkel zwischen der Hauptanströmungsrichtung und der Zackenkante (bzw. Linie EG in Fig. 4) weniger als 90°, insbesondere weniger als 45° ist. Somit liegt der für Figur 4 berechnete Winkel $\Phi_E$ in dem genannten Bereich. Es ist ebenfalls möglich, den Winkel $\Phi$ zu variieren, z.B. durch die Variation des Verhältnisses von $H/\lambda$ oder der Anströmungsrichtung. Bei der Variation von $H/\lambda$ = [0.5,1,2,4,6,8] und der Annahme, dass die Anströmungsrichtung konstant ist, würde für $\Phi$ die folgenden Werte ergeben: 45; 26,56; 14,03; 7,12; 4,76; 3,57 Grad. Dies setzt voraus, dass die Anströmungsrichtung unverändert bleibt. Die lokale Strömungsrichtung variiert aber bei Betrieb der Windenergieanlage.

Daher wird eine Beziehung zwischen der Line A'E und AE hergestellt. Dies erlaubt eine Verteilung von nicht-symmetrischen Zackengeometrien, in denen der Winkel $\Phi$ entlang der Spannweite des Rotorblatts variiert.

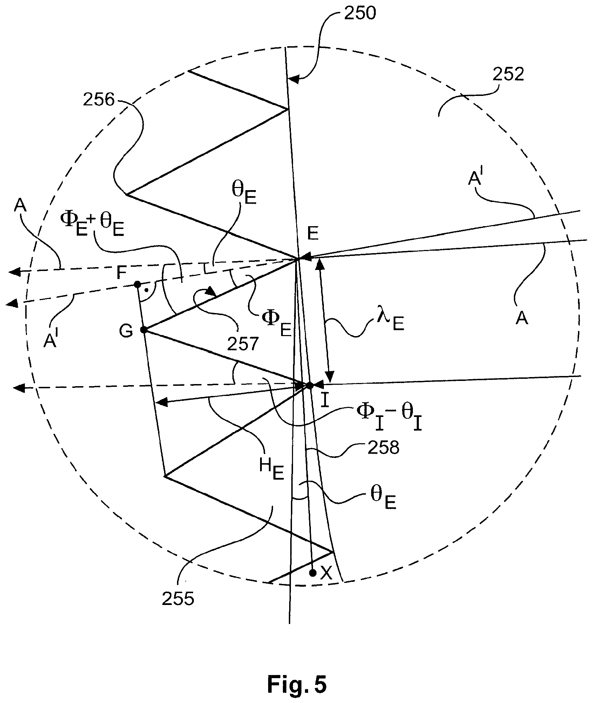

Figur 5 zeigt dabei einen weiteren Ausschnitt 252 des Rotorblatts 200 der Figur 3 mit dem Hinterkantenverlauf 250. Zusätzlich zur Figur 4 zeigt Figur 5 eine durch den Punkt E durchgehende Tangente 258. Die Zacken 255 sind normal (zur Tangente 258 der Hinterkante) zur Hinterkante ausgerichtet. Die Normale zu der Hinterkante erzeugt einen Zacken-Pitchwinkel $\theta_E$ mit der An-strömungsrichtung normal zur Pitch-Achse 200a. Der Zacken-Pitchwinkel $\theta_E$ wird über die Tangente an dem Punkt E (Linie XE 258) ermittelt. Wenn die Tangente 258 an jeder Position der Hinterkante 250 verschieden ist, variiert der Zacken-Pitchwinkel $\theta_E$ vom Beginn des Rotorblattes 200 bis zum Ende der Rotorblattspitze bzw. von der Rotorblattwurzel bis hin zur Rotorblattspitze abhängig von dem jeweiligen Hinterkantenverlauf 250. Es kann aus Figur 5, insbesondere an den Positionen E und I, erkannt werden, dass der Winkel zwischen der lokalen Anströmungsrichtung und den Zackenkanten 257 sich aus $\Phi_E + \theta_E$ bzw. $\Phi_I - \theta_I$ berechnet. Die Zackenkanten 257 sind nicht symmetrisch über die Anströmungsrichtungslinie AE, weil der Winkel $\Phi + \theta_E$ nicht identisch zu dem Winkel $\Phi - \theta_I$ ist. Dies zeigt an, dass der lokale Anströmungswinkel zwischen der Anströmungsrichtung und der Zackenkante 257 an dem Punkt E und an dem Punkt I nicht identisch sein wird. Dies gilt nur, wenn die lokale Anströmungsrichtung normal zu der Pitch-Achse wie in Figur 4 ist.

Die exakte lokale Anströmungsrichtung ist allerdings immer unbekannt. Sie kann bestenfalls durch eine Annahme angenähert werden. Daher ist es ebenfalls möglich, die Zackengeometrie derart zu ändern, dass ein optimales $\Phi$ und $H/\lambda$ erzielt wird.

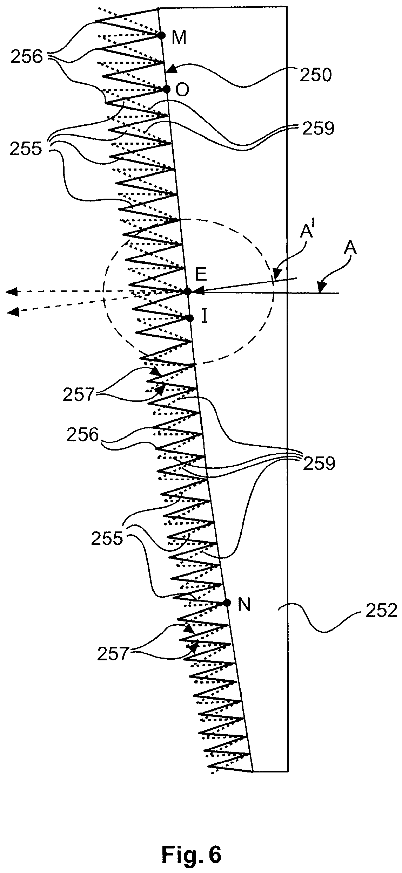

Figur 6 zeigt dabei schematisch einen Ausschnitt 252 eines Rotorblatts 200 mit zwei verschiedenen Zackengeometrien. Die erste Geometrie, nämlich die Zacken 255 sind normal zu der Hinterkante 250 des Rotorblattes 200 ausgerichtet. Die zweite Geometrie, nämlich die Zacken 259 sind normal zu der Pitch-Achse 200a des Rotorblatts 200 ausgerichtet. Die Zacken 259 sind dabei mit einer Strichpunktlinie dargestellt. Für diesen Fall ist der Winkel zwischen der Anströmungsrichtung und der Zackenkante an Punkt E und I $\theta_E$ bzw. $\theta_I$.

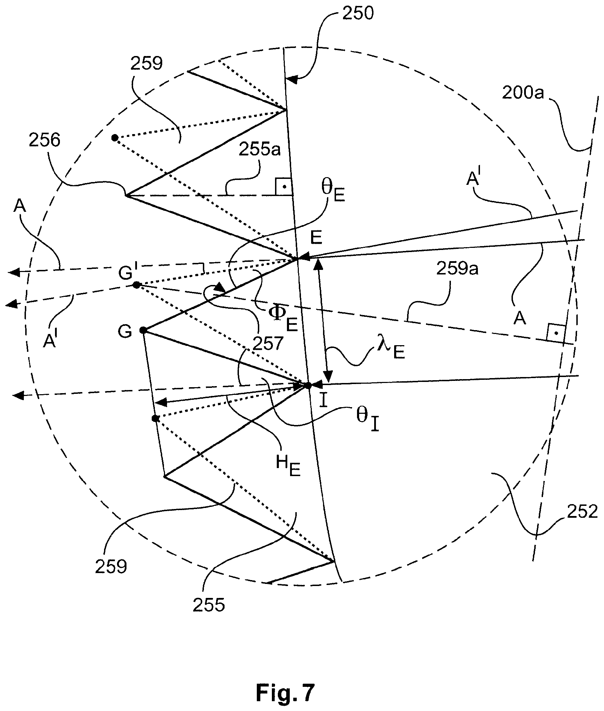

Figur 7 zeigt einen vergrößerten Ausschnitt 252 des Rotorblatts 200. Die Zackengeometrie wird über eine Koordinatentransformation der Zackendaten von den Zacken, die normal zur Hinterkante angeordnet sind, durchgeführt.

In Figur 7 sind somit zum einen die Zacken 255 mit den Zackenspitzen 256 und den Zackenkanten 257 gezeigt, wobei eine Winkelhalbierende 255a-255e dieser Zacken senkrecht auf der Hinterkantenverlaufslinie 250 steht. Eine Winkelhalbierende 259a der Zacken 259 steht senkrecht auf der Pitch-Drehachse bzw. der Pitch-Achse 200a.

Geräuschfeldermessungen wurden für drei Rotorblattkonfigurationen durchgeführt: 1. für ein Rotorblatt ohne Zacken, 2. für ein Rotorblatt mit Zacken, die normal zur Rotorblatthinterkante ausgerichtet sind und 3. für ein Rotorblatt mit Zacken, die normal zur Pitch-Achse ausgerichtet sind. Aus den Daten hat sich ergeben, dass die jeweiligen Rotorblätter mit den Zacken an dem Rotorblatt geräuschärmer waren als die Rotorblätter ohne Zacken an dem Rotorblatt. Besonders bevorzugt ist zudem die Ausrichtung der Zacken abhängig von dem Hinterkantenverlauf des Rotorblattes. Diese Anordnung erzielt besonders gute Geräuschreduzierungen beispielsweise bei Zunahme, insbesondere in radialer Position $i = 1,3,5... N-1$, und Abnahme, insbesondere in radialer Position $i = 2,4,6,...N$, des Winkels $\Phi_i$ entlang der Spannweite. Dies resultiert daher, dass aufgrund verschiedener lokaler Anströmungsbedingungen wie verschiedene Reynoldszahlen, Machzahlen und Anstellwinkel an den verschiedenen Positionen der Rotorblatt verschieden große Wirbel nahe der Hinterkante erzeugt werden, d.h. für größere turbulente Wirbel sind Zacken mit einem $\Phi_i$ effektiver, wie beispielsweise am Punkt E $i = 17$ als kleinere Winkel. Für kleinere Wirbel sind Zacken mit kleinem $\Phi_i$, z.B. am Punkt I, $i = 18$, effektiver als Zacken mit einem großen Winkel. Andererseits sind für mittelgroße Wirbel beide Zackengeometrien effektiv. Für optimale Ergebnisse sollten zudem die folgenden Bedingungen erfüllt sein:

I. Die Strouhal-Zahl $\omega h/U_c >> 1$, wobei

$$H\left(\frac{r}{R}\right) = 2h = c2 \cdot \Lambda_{p3}\left(\frac{r}{R}\right)$$ ist, und c2 = 2 bis 15 eine Konstante ist,

II. Länge zu Weiteverhältnis $\dfrac{H}{\lambda} > 0,5$, wobei $\lambda = H/c3$ ist und c3 = 0,5 bis 6 eine empirische Konstante ist,

III. der Zacken-Hinterkantenverlaufswinkel zwischen der lokalen Anströmrichtung und der Zackenkante $\Phi_i < 90°$, dabei wird vorausgesetzt, dass die Anströmung normal zu der Pitch-Achse des Rotorblatts ist, vorliegend also $\Phi_i = \Phi \pm \theta_i$ gemäß Figur 5. Dabei variiert der Zacken-Pitchwinkel $\theta_i$ entlang der Spannweite abhängig von dem Hinterkantenverlauf.

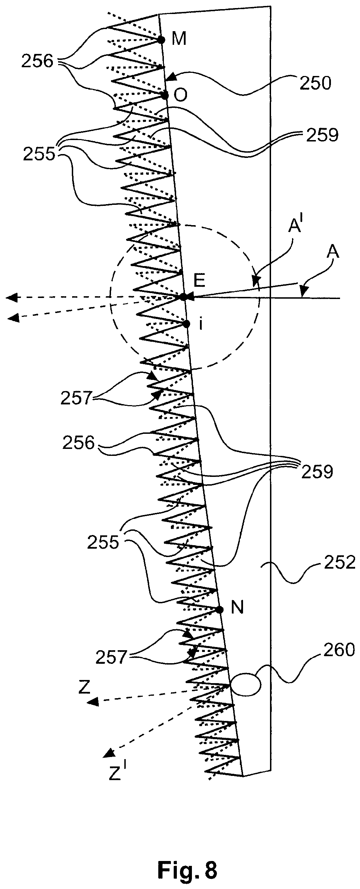

Figur 8 zeigt zusätzlich zur Figur 6 eine Turbulenz bzw. einen Wirbel 260, der sich der Hinterkante nähert. Die Turbulenz 260 ist dabei vereinfacht als Ellipse dargestellt. Nach den theoretischen Annahmen würde sich die Turbulenz 260 weiter in Richtung Z bewegen. In Realität würde die Turbulenz 260 sich jedoch weiter in Richtung Z' bewegen. Eine solche Turbulenz ist dabei ein unerwartetes, unstetiges aerodynamisches Phänomen, das in der Realität durchaus auftreten kann. In solchen Situationen wird die Bedingung $\Phi_i < 90°$ gestört. Die dargestellten Zacken 255 und 259 können aber auch solche Turbulenzen 260 ausgleichen und reduzieren somit auch noch im Falle einer solchen Turbulenz 260 die Geräuschentwicklung am Rotorblatt 200.

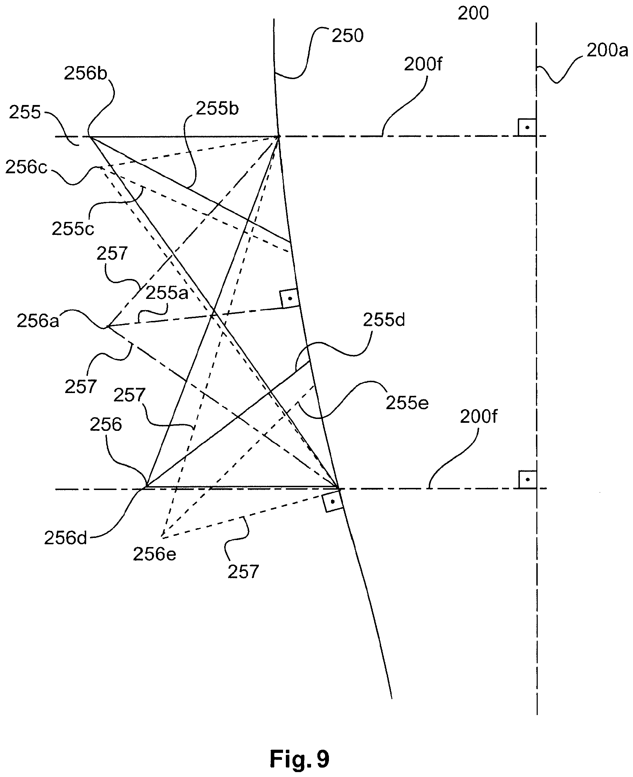

Figur 9 zeigt eine schematische Darstellung eines Ausschnitts eines Rotorblatts gemäß einem zweiten Ausführungsbeispiel der Erfindung. Das Rotorblatt 200 weist eine Pitch-Drehachse 200a und einen Hinterkantenverlauf 250 auf. Des Weiteren weist das Rotorblatt eine Mehrzahl von Zacken 255 an dem Hinterkantenverlauf 250 auf. Die Zacken 255 weisen jeweils eine Zackenspitze 256 sowie zwei Zackenkanten 257 und eine Winkelhalbierende 255a auf.

Die Hinterkante eines Rotorblattes gemäß dem zweiten Ausführungsbeispiel kann einen Hinterkantenabschnitt aufweisen (wie in Figur 2 gezeigt), welcher unabhängig von dem Rotorblatt hergestellt wird und beim Herstellungsprozess des Rotorblattes an der Hinterkante befestigt wird. Ein derartiger Hinterkantenabschnitt ist somit ein separates Teil und kann dazu verwendet werden, das bereits gefertigte Rotorblatt mit einer Zackengeometrie an der Hinterkante nachzurüsten.

In Figur 9 sind fünf verschiedene mögliche Zackengeometrien gezeigt. Diese Zacke 255 weisen jeweils eine Zackenspitze 256a-256e auf. Jede der Zacken 255 weist ferner eine Winkelhalbierende 255a-255e auf. Ferner ist eine Anströmrichtung 200b, 200c dargestellt, welche senkrecht auf der Pitch-Drehachse 200a steht. Das Rotorblatt 200 gemäß dem zweiten Ausführungsbeispiel kann auf einem Rotorblatt gemäß dem ersten Ausführungsbeispiel basieren und betrifft ein Rotorblatt, welches eine Zackengeometrie aufweist, wobei die Winkelhalbierenden 255a-255e beispielsweise senkrecht auf einer Tangente an der Hinterkante 250 vorgesehen ist. Die Zackengeometrie gemäß dem zweiten Ausführungsbeispiel betrifft einen Geometriebereich, wobei die Extremfälle die Zacken 255 mit den Zackenspitzen 256b und 256d darstellen, die jedoch nicht in dem erfindungsgemäßen Geometriebereich enthalten sind. Bei diesen beiden Extremfällen ist eine der Zackenkante 257 parallel zu der Anströmrichtung 200b, 200c ausgerichtet.

Gemäß der Erfindung kann die Winkelhalbierende 255a optional im Wesentlichen senkrecht auf dem Hinterkantenverlauf 250, insbesondere kann der Winkel zwischen der Winkelhalbierenden der Zacken und dem Hinterkantenverlauf zwischen 70 und 110 Grad betragen.

Gemäß der Erfindung ist die Ausrichtung der Flanken der Zacken ein wichtiger Parameter. Dadurch, dass der Hinterkantenverlauf des erfindungsgemäßen Rotorblattes nicht gerade ist, hat dies auch Auswirkungen auf die Geometrie der Zacken.

Das Vorsehen der Zacken an der Rotorblatthinterkante kann dazu führen, dass der Abströmungsvektor anders ausgerichtet ist als der Anströmungsvektor. Dies kann insbesondere im Bereich der Rotorblattspitze relevant werden, weil im Bereich des äußeren Abschnitts bzw. Durchmessers des Rotorblattes sich der Hinterkantenverlauf entlang der Länge des Rotorblattes stärker ändert. Aufgrund von Zentrifugaleffekten kann es dazu kommen, dass die Anströmung nicht mehr zweidimensional, sondern dreidimensional ist. Gemäß der Erfindung können die Zacken so ausgestaltet sein, dass die Zackenspitzen außermittig vorgesehen sind.

Gemäß der Erfindung können die Zacken zumindest abschnittsweise entlang der Länge des Rotorblattes so ausgestaltet sein, dass die Zacken nicht symmetrisch sind bzw., dass die beiden Zackenkanten 257 nicht die gleiche Länge aufweisen.

Gemäß einem Aspekt der vorliegenden Erfindung steht die Winkelhalbierende, welche durch die Zackenspitze verläuft, senkrecht auf einer Tangente an der Hinterkante. Alternativ bzw. zusätzlich dazu kann die Länge der Zackenkanten 257 einer Zacke unterschiedlich sein, so dass die Zacke nicht symmetrisch ausgestaltet ist.

Die Erfindung betrifft ein Windenergieanlagen-Rotorblatt, welches an seiner Hinterkante einen Hinterkantenabschnitt aufweist, welcher eine Mehrzahl von Zacken, jeweils mit einer Zackenspitze, zwei Zackenkanten und einer Winkelhalbierenden aufweist. Der Hinterkantenabschnitt kann separat gefertigt sein oder zusammen mit dem Rest des Rotorblattes gefertigt werden. Die Winkelhalbierenden einiger der Zacken der Mehrzahl der Zacken ist in einem Winkel zwischen 70 und 110 Grad bezogen auf einer Tangente an einer Hinterkantenverlaufslinie angeordnet. Vorzugsweise steht die Winkelhalbierende im Wesentlichen senkrecht auf der Tangente an der Hinterkantenverlaufslinie.

Optional kann die Hinterkante des Rotorblattes, zumindest abschnittsweise nicht parallel zu einer Pitch-Drehachse des Rotorblattes angeordnet sein. Damit muss die Winkelhalbierende der zumindest einiger der Zacken der Mehrzahl der Zacken nicht senkrecht auf der Pitch-Drehachse stehen.

**Patentansprüche**

1. Windenergieanlagen-Rotorblatt, mit

   einer Vorderkante (202), einer Hinterkante (201), einer Rotorblattwurzel (209), einer Rotorblattspitze (210), einer Saugseite (200b), einer Druckseite (200c), einer Rotorblattlänge (L), einer Profiltiefe (200d), und einer Pitch-Drehachse (200a),

      wobei die Profiltiefe (200d) entlang der Rotorblattlänge (L) von der Rotorblattwurzel (209) zur Rotorblattspitze (210) hin abnimmt,
      wobei die Hinterkante (201) eine Hinterkantenverlaufslinie (250) aufweist, welche die Kontur der Hinterkante (201) abbildet,

   wobei die Hinterkante (201) eine Mehrzahl von Zacken (255) zur Verbesserung eines Strömungsverhaltens an der Hinterkante (201) aufweist,
   wobei die Zacken (255) jeweils eine Zackenspitze (256), zwei Zackenkanten (257) und eine Winkelhalbierende (255a-255e) aufweisen,
   wobei die Zackenkanten (257) nicht parallel zu einer Anströmrichtung (200f) vorgesehen sind, welche senkrecht zur Pitch-Drehachse (200a) steht,
   wobei die Zackenkanten (257) nicht senkrecht auf einer Tangente an der Hinterkantenverlaufslinie (250) stehen,
   wobei die Hinterkantenverlaufslinie (250) eine Mehrzahl von Abschnitten aufweist, wobei zumindest eine der Abschnitte nicht parallel zu der Pitch-Drehachse (200a) verläuft,
   wobei die Winkelhalbierende (255a-255e) jeder Zacke (255) nicht senkrecht zur Pitch-Drehachse (200a) steht, wobei

      - jede Zacke (255) wenigstens zwei Zackenkanten (257) aufweist und
      - die Hinterkante (201)

   einen Zacken-Hinterkantenverlaufswinkel ($\Phi_E$) aufweist, der durch eine Zackenkante (257) und einer normal zur Hinterkantenverlaufslinie vorgesehenen Anströmrichtung (A, A') definiert ist, wobei der Zacken-Hinterkantenverlaufswinkel ($\Phi_E$) kleiner als 90° ist, wobei der Zacken-Hinterkantenverlaufswinkel ($\Phi_E$) bei den Zackenkanten (257), die zur Rotorblattwurzel (209) zeigen, von der Rotorblattwurzel (209) zur Rotorblattspitze (210) zunimmt oder bei den Zackenkanten (257), die von der Rotorblattwurzel (209) wegzeigen, von der Rotorblattwurzel (209) zur Rotorblattspitze (210) abnimmt.

2. Windenergieanlagen-Rotorblatt nach Anspruch 1, wobei

   eine Länge der zwei Zackenkanten (257) einer Zacke (255) ungleich ist und/oder
   wobei ein Winkel einer Winkelhalbierenden (255a-255e) zu einer Tangente an der Hinterkantenverlaufslinie (250) zwischen 70 und 110 Grad, insbesondere 90 Grad beträgt.

3. Windenergieanlagen-Rotorblatt nach Anspruch 1, wobei
   der Zacken-Hinterkantenverlaufswinkel ($\Phi_E$) entlang einer Rotorblattlänge (L) variabel ist.

4. Windenergieanlagen-Rotorblatt nach einem der vorstehenden Ansprüche, wobei die Hinterkante (1) einen Zacken-Pitchwinkel ($\theta_i$) aufweist, der an einer vorgegebenen Position auf der Hinterkantenverlaufslinie durch eine Tangente (258) definiert ist.

5. Windenergieanlagen-Rotorblatt nach einem der vorstehenden Ansprüche, wobei die Mehrzahl der Zacken (255) und/oder Zackenkanten (257) entlang einer bzw. der Rotorblattlänge (L) unsymmetrisch angeordnet sind.

6. Windenergieanlagen-Rotorblatt nach einem der vorstehenden Ansprüche, wobei die Hinterkantenverlaufslinie (250) zumindest teilweise über die Rotorblattlänge (L) gekrümmt verläuft.

7. Windenergieanlage (100) mit wenigstens einem Rotorblatt (2) nach einem der Ansprüche 1-6.

8. Verfahren zum Herstellen eines Windenergieanlagen-Rotorblattes, welches eine Mehrzahl von Zacken (255) an einer Hinterkante aufweist, wobei

- die Hinterkante (201) eine Hinterkantenverlaufslinie (250) aufweist, die die Kontur der Hinterkante (1) abbildet, und
- die Zackengeometrie in Abhängigkeit von der Hinterkantenverlaufslinie (250) berechnet wird, wobei
- die lokale Anströmung (A, A') als Normale zu der Hinterkantenverlaufslinie (50) angenommen wird und
- ein Zacken-Hinterkantenverlaufswinkel ($\Phi_E$) der durch eine Zackenkante (7, 57) und einer normal zur Hinterkantenverlaufslinie vorgesehenen Anströmrichtung (A, A') definiert ist, berechnet wird,
wobei der Zacken-Hinterkantenverlaufswinkel ($\Phi_E$) kleiner als 90° ist,
wobei die Zacken (255) jeweils eine Zackenspitze (256), zwei Zackenkanten (257) und eine Winkelhalbierende (255a-255e) aufweisen,
wobei die Zackenkanten (257) nicht parallel zu einer Anströmrichtung (200f) vorgesehen sind,
welche senkrecht zur Pitch-Drehachse (200a) steht,
wobei die Zackenkanten (257) nicht senkrecht auf einer Tangente an der Hinterkantenverlaufslinie (250) stehen,
wobei die Hinterkantenverlaufslinie (250) eine Mehrzahl von Abschnitten aufweist, wobei zumindest eine der Abschnitte nicht parallel zu der Pitch-Drehachse (200a) verläuft,
wobei die Winkelhalbierende (255a-255e) jeder Zacke (255) nicht senkrecht zur Pitch-Drehachse (200a) steht,
wobei das Rotorblatt (200) eine Rotorblattwurzel (209) und eine Rotorblattspitze (210) aufweist, wobei der Zacken-Hinterkantenverlaufswinkel ($\Phi_E$) bei den Zackenkanten (257), die zur Rotorblattwurzel (209) zeigen, von der Rotorblattwurzel (209) zur Rotorblattspitze (210) zunimmt oder bei den Zackenkanten (257), die von der Rotorblattwurzel (209) wegzeigen, von der Rotorblattwurzel (209) zur Rotorblattspitze (210) abnimmt.

9. Verfahren nach einem der Ansprüche 8, wobei

- die lokale Anströmungsrichtung (A, A') als normal zur Pitch-Achse des Rotorblatts (200) angenommen wird und/oder
- mehrere Zacken (255) normal zur Pitch-Achse ausgerichtet werden,

wobei ein Zacken-Pitchwinkel ($\theta_i$) berechnet wird, der zwischen der Pitch-Achse und einer Zackenkante (257) dem Winkel einer Tangente (258) an einer Position der Hinterkante (201) entspricht.

## Claims

1. Wind turbine rotor blade, with

a leading edge (202), a trailing edge (201), a rotor blade root (290), a rotor blade tip (210), a suction side (200b), a pressure side (200c), a rotor blade length (L), a profile depth (200d) and a pitch axis of rotation (200a),

the profile depth (200d) decreasing along the rotor blade length (L) from the rotor blade root (209) to the rotor blade tip (210), the trailing edge (201) having a trailing edge delimiting line (250), which replicates the contour of the trailing edge (201), the trailing edge (201) having a plurality of serrations (255) to improve flow behaviour at the trailing edge (201), the serrations (255) respectively having a serration tip (256), two serration edges (257) and an angle bisector (255a-255e), the serration edges (257) being provided non-parallel to a direction of incident flow (200f) that is perpendicular to the pitch axis of rotation (200a), the serration edges (257) being non-perpendicular to a tangent to the trailing edge delimiting line (250), the trailing edge delimiting line (250) having a plurality of portions, at least one of the portions extending non-parallel to the pitch axis of rotation (200a), wherein the angle bisector (255a-255e) of each serration (255) is non-perpendicular to the pitch axis of rotation (200a),

- each serration (255) having at least two serration edges (257) and
- the trailing edge (201) having a serration trailing edge delimiting angle ($\Phi_E$), which is defined by a serration edge (257) and a direction of incident flow (A, A') provided normal to the trailing edge delimiting line,

the serration trailing edge delimiting angle ($\Phi_E$) being less than 90°,
wherein the serration trailing edge delimiting angle ($\Phi_E$) increases from the rotor blade root (209) to the rotor blade tip (210) in the case of the serration edges (257) that point towards the rotor blade root (209) or decreases from the rotor blade root (209) to the rotor blade tip (210) in the case of the serrations edges (257) that point away from the rotor blade root (209).

2. Wind turbine rotor blade according to Claim 1, a length of the two serration edges (257) of a serration (255) being unequal and/or an angle of an angle bisector (255a-255e) to a tangent to the trailing edge delimiting line (250) being between 70 and 110 degrees, in particular 90 degrees.

3. Wind turbine rotor blade according to Claim 1, the serration trailing edge delimiting angle ($\Phi_E$) being variable along a rotor blade length (L).

4. Wind turbine rotor blade according to one of the preceding claims, the trailing edge (1) having a serration pitch angle ($\theta_i$) which is defined at a predetermined position on the trailing edge delimiting line by a tangent (258).

5. Wind turbine rotor blade according to one of the preceding claims, the plurality of serrations (255) and/or serration edges (257) being arranged asymmetrically along a or the rotor blade length (L).

6. Wind turbine rotor blade according to one of the preceding claims, the trailing edge delimiting line (250) at least partially extending in a curved manner over the rotor blade length (L).

7. Wind turbine (100) with at least one rotor blade (2) according to one of Claims 1-6.

8. Method for producing a wind turbine rotor blade that has a plurality of serrations (255) at a trailing edge,

- the trailing edge (201) having a trailing edge delimiting line (250), which replicates the contour of the trailing edge (1), and
- the serration geometry being calculated in dependence on the trailing edge delimiting line (250),
- the local incident flow (A, A') being assumed to be normal to the trailing edge delimiting line (50) and
- a serration trailing edge delimiting angle ($\Phi_E$) defined by a serration edge (7, 57) and the incident flow (A, A') normal to the trailing edge delimiting line being calculated,

the serration trailing edge delimiting angle ($\Phi_E$) being less than 90°,

the serrations (255) respectively having a serration tip (256), two serration edges (257) and an angle bisector (255a-255e),
the serration edges (257) being non-parallel to a direction of incident flow (200f), which is perpendicular to a pitch axis of rotation (200a) of a wind turbine rotor blade,
the serration edges (257) being non-perpendicular to a tangent to the trailing edge delimiting line (250), and
wherein the trailing edge delimiting line (250) comprises a plurality of portions, wherein one of the portions is non-parallel to the pitch axis of rotation (200a),
wherein the angle bisector (255a-255e) of each serration (255) is non-perpendicular to the pitch axis of rotation (200a),
wherein the rotor blade (200) comprises a rotor blade root (209) and a rotor blade tip (210)
wherein the serration trailing edge delimiting angle ($\Phi_E$) increases from the rotor blade root (209) to the rotor blade tip (210) in the case of the serration edges (257) that point towards the rotor blade root (209) or decreases from the rotor blade root (209) to the rotor blade tip (210) in the case of the serrations edges (257) that point away from the rotor blade root (209).

9. Method according to claim 8,

- the direction of local incident flow (A, A') being assumed to be normal to the pitch axis of the rotor blade (200) and/or
- multiple serrations being aligned normal to the pitch axis,

a serration pitch angle ($\theta_i$) which, between the pitch axis and a serration edge (7, 57), corresponds to the angle of a tangent (258) at a position of the trailing edge (1) being calculated.

**Revendications**

1. Pale de rotor d'éolienne avec

un bord d'attaque (202), un bord de fuite (201), une racine de pale de rotor (209), une pointe de pale de rotor (210), un extrados (200b), un intrados (200c), une longueur de pale de rotor (L), une profondeur de profil (200d) et un axe de rotation à pas (200a),

dans laquelle la profondeur de profil (200d) diminue le long de la longueur de pale de rotor (L) depuis la racine de pale de rotor (209) en direction de la pointe de pale de rotor (210),

dans laquelle le bord de fuite (201) présente une ligne de profil de bord de fuite (250), laquelle reproduit le contour du bord de fuite (201),

dans laquelle le bord de fuite (201) présente une multitude de dents (255) pour améliorer un comportement d'écoulement sur le bord de fuite (201),

dans laquelle les dents (255) présentent respectivement une pointe de dent (256), deux arêtes de dent (257) et une bissectrice (255a-255e),

dans laquelle les arêtes de dent (257) ne sont pas prévues de manière parallèle par rapport à un sens d'écoulement (200f) qui est perpendiculaire par rapport à l'axe de rotation à pas (200a),

dans laquelle les arêtes de dent (257) ne se situent pas de manière perpendiculaire sur une tangente sur la ligne de profil de bord de fuite (250),

dans laquelle la ligne de profil de bord de fuite (250) présente une multitude de sections, dans laquelle au moins une des sections ne s'étend pas de manière parallèle par rapport à l'axe de rotation à pas (200a),

dans laquelle la bissectrice (255a-255e) de chaque dent (255) n'est pas perpendiculaire par rapport à l'axe de rotation à pas (200a), dans laquelle

- chaque dent (255) présente au moins deux arêtes de dent (257) et
- le bord de fuite (201) présente un angle de profil de bord de fuite de dent ($\phi$E),

qui est défini par une arête de dent (257) et un sens d'écoulement (A, A') prévu de manière normale par rapport à la ligne de profil de bord de fuite,

dans laquelle l'angle de profil de bord de fuite de dent ($\phi$E) est inférieur à 90°,

dans laquelle l'angle de profil de bord de fuite de dent ($\phi$E) augmente, pour les arêtes de dent (257) qui pointent en direction de la racine de pale de rotor (209), depuis la racine de pale de rotor (209) vers la pointe de pale de rotor (210) ou diminue, pour les arêtes de dent (257) qui pointent dans le sens opposé à la racine de pale de rotor (209), depuis la racine de pale de rotor (209) vers la pointe de pale de rotor (210).

2. Pale de rotor d'éolienne selon la revendication 1, dans laquelle

une longueur des deux arêtes de dent (257) d'une dent (255) n'est pas identique et/ou dans laquelle un angle d'une bissectrice (255a-255e) par rapport à une tangente sur la ligne de profil de bord de fuite (250) est compris entre 70 et 110 degrés, en particulier est de 90 degrés.

3. Pale de rotor d'éolienne selon la revendication 1, dans laquelle
l'angle de profil de bord de fuite de dent ($\phi$E) est variable le long d'une longueur de pale de rotor (L).

4. Pale de rotor d'éolienne selon l'une quelconque des revendications précédentes, dans laquelle le bord de fuite (1) présente un angle de pas de dent ($\theta$i), qui est défini par une tangente (258) sur une position prédéfinie sur la ligne de profil de bord de fuite.

5. Pale de rotor d'éolienne selon l'une quelconque des revendications précédentes, dans laquelle la multitude de dents (255) et/ou d'arêtes de dent (257) sont disposées de manière asymétrique le long d'une ou de la longueur de pale de rotor (L).

6. Pale de rotor d'éolienne selon l'une quelconque des revendications précédentes, dans laquelle la ligne de profil de bord de fuite (250) s'étend de manière incurvée au moins en partie sur la longueur de pale de rotor (L).

7. Eolienne (100) avec au moins une pale de rotor (2) selon l'une quelconque des revendications 1 à 6.

8. Procédé de fabrication d'une pale de rotor d'éolienne, laquelle présente une multitude de dents (255) sur un bord de fuite, dans lequel

- le bord de fuite (201) présente une ligne de profil de bord de fuite (250) qui reproduit le contour du bord de fuite (1), et
- la géométrie de dent est calculée en fonction de la ligne de profil de bord de fuite (250), dans lequel
- l'écoulement local (A, A') est pris comme la normale par rapport à la ligne de profil de bord de fuite (50) et
- un angle de profil de bord de fuite de dent ($\phi$E) qui est défini par une arête de dent (7, 57) et un sens d'écoulement (A, A') prévu de manière normale par rapport à la ligne de profil de bord de fuite, est calculé,

dans lequel l'angle de profil de bord de fuite de dent ($\phi$E) est inférieur à 90°,

dans lequel les dents (255) présentent respectivement une pointe de dent (256), deux arêtes de dent (257) et une bissectrice (255a-255e),

dans lequel les arêtes de dent (257) ne sont pas prévues de manière parallèle par rapport à un sens d'écoulement (200f) qui est perpendiculaire par rapport à l'axe de rotation à pas (200a),

dans lequel les arêtes de dent (257) ne sont pas perpendiculaires sur une tangente sur la ligne de profil de bord de fuite (250),

dans lequel la ligne de profil de bord de fuite (250) présente une multitude de sections, dans lequel au moins une des sections ne s'étend pas de manière parallèle par rapport à l'axe de rotation à pas (200a),

dans lequel la bissectrice (255a-255e) de chaque dent (255) n'est pas perpendiculaire par rapport à l'axe de rotation à pas (200a),

dans lequel la pale de rotor (200) présente une racine de pale de rotor (209) et une pointe de pale de rotor (210), dans lequel l'angle de profil de bord de fuite de dent ($\phi$E) augmente, pour les arêtes de dent (257) qui pointent en direction de la racine de pale de rotor (209), depuis la racine de pale de rotor (209) en direction de la pointe de pale de rotor (210) ou diminue, pour les arêtes de dent (257) qui pointent dans le sens opposé à la racine de pale de rotor (209), depuis la racine de pale de rotor (209) en direction de la pointe de pale de rotor (210).

9. Procédé selon la revendication 8, dans lequel

- le sens d'écoulement (A, A') local est pris en tant normal par rapport à l'axe de pas de la pale de rotor (200), et/ou
- plusieurs dents (255) sont orientées de manière normale par rapport à l'axe de pas,

dans lequel est calculé un angle de pas de dent ($\theta$i), qui correspond à l'angle d'une tangente (258) sur une position du bord de fuite (201) entre l'axe de pas et une arête de dent (257).

200

200     104                    106

                    110

100

                         102

**Fig. 1**

**Fig. 2**

**Fig. 3**

**Fig. 4**

**Fig. 5**

**Fig. 6**

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037368 A1
- EP 0652367 A1
- WO 2014086919 A1
- US 20030175121 A1
- US 5088665 A